# NEUE EUROPÄISCHE PATENTSCHRIFT

(11) **EP 2 011 638 B2**
(45) Veröffentlichungstag und Bekanntmachung des Hinweises auf die Entscheidung über den Einspruch: **14.11.2012**
(45) Hinweis auf die Patenterteilung: 29.07.2009
(21) Anmeldenummer: 08010302.1
(22) Anmeldetag: 06.06.2008
(51) Int. Cl.: B32B 7/12, B32B 15/08, B05D 1/36, C08J 5/12

(54) **Hybridbauteil mit haftvermittelnder Beschichtung sowie Verfahren zu dessen Herstellung**
Hybrid component with adhesive coating and method for its manufacture
Composant hybride doté d'un revêtement adhésif et son procédé de fabrication

(30) Priorität: 05.07.2007 DE 102007031349
(43) Veröffentlichungstag der Anmeldung: 07.01.2009
(73) Patentinhaber: Bayerische Motoren Werke Aktiengesellschaft, 80809 München (DE)
(72) Erfinder: Holzleitner, Jochen, 84030 Ergolding (DE); Erdmann, Marc, 81476 München (DE)

(56) Entgegenhaltungen:
- EP-A- 0 283 280
- EP-A- 1 808 468
- EP-A1- 0 283 280
- EP-A2- 1 808 468
- WO-A1-2007/057249
- WO-A2-2008/089873
- DE-A1- 10 326 353
- DE-A1- 10 361 096
- DE-A1-102005 015 340
- JP-A- 2001 279 461
- JP-A- 2001 279 461
- JP-A- 2005 169 648
- JP-A- 2005 169 648
- US-A1- 2002 151 776
- US-B1- 6 494 983

## Beschreibung

Die Erfindung betrifft ein Hybridbauteil mit einer haftvermittelnden Beschichtung sowie ein Verfahren zu dessen Herstellung.

Aus DE 38 39 855 C2 ist ein Leichtbaukörper aus einem Grundkörper aus Stahlblech bekannt, in den Verstärkungsrippen aus Kunststoff durch Anspritzen von plastifiziertem Kunststoff eingebracht werden. Die Verbindung zwischen dem metallischem Grundkörper und dem Kunststoff wird über Durchbrüche in dem Stahlblech gewährleistet, durch die der plastifizierte Kunststoff während des Anspritzens hindurch tritt, so dass nach dem Aushärten eine formschlüssige Verbindung gegeben ist.

Derartige, aus mindestens einem metallischen und einem Kunststoffelement bestehende Bauteile werden auch Hybridbauteile genannt. Durch eine sinnvolle Kombination der beiden Werkstoffe in einem Bauteil kann dieses - trotz geringen Gewichts - mit guten mechanischen Kennwerten ausgebildet werden. Hybridbauteile finden als Leichtbauteile derzeit verstärkt Anwendung im Bereich des Kraftfahrzeugbaus.

Problematisch an den aus der DE 38 39 855 C2 bekannten Hybridbauteilen ist insbesondere die Korrosionsbeständigkeit sowie die Schweißbarkeit, die zur beispielsweise Einbindung des Bauteils in die Karosserie des Kraftfahrzeugs notwendig ist. Wird ein unbeschichtetes Stahlblech für die Herstellung des Hybridbauteils verwendet, so stellt die Schweißbarkeit in der Regel kein Problem dar. Problematisch kann in diesem Fall jedoch die Korrosionsbeständigkeit insbesondere im Kontaktbereich zwischen der metallischen und der Kunststoffkomponente sein, da gegebenenfalls bei einer nachträglichen Beschichtung des Hybridbauteils mit einem Korrosionsschutzmittel, das Korrosionsschutzmittel nicht vollständig in den Kontaktspalt eindringt, wodurch an diesen Stellen potentielle Korrosionsschwachstellen entstehen. Wird das Metallblech dagegen vor der Verbindung mit der Kunststoffkomponente mit einer Korrosionsschutzschicht versehen, so ist bei den bekannten Korrosionsschutzschichten eine Schweißbarkeit des Metallblechs nicht mehr gegeben.

Ein weiteres Problem bei den aus der DE 38 39 855 C2 bekannten Hybridbauteilen ist die lediglich punktuelle Verbindung zwischen der metallischen und der Kunststoffkomponente, die die Höhe der Kraftübertragung zwischen den Komponenten begrenzt und somit das Potential, dass eine Kombination der beiden Werkstoffe grundsätzlich bietet, nicht in ausreichendem Maße ausschöpft.

Eine Weiterentwicklung bei der Herstellung von Hybridbauteilen ist in der DE 103 61 096 A1 offenbart. Daraus ist ein Bauteil sowie ein Verfahren zu dessen Herstellung bekannt, wobei das Bauteil wenigstens bereichsweise aus Metall gebildet und der metallische Bereich wenigstens teilweise mit einem thermoplastischen Kunststoff umspritzt ist, wobei zwischen dem Kunststoff und dem metallischen Bereich wenigstens bereichsweise eine wenigstens an seiner dem Kunststoff zugewandten Seite eine aus einem thermoplastischen Material bestehende Haftvermittlerschicht vorgesehen ist, mittels der zwischen dem metallischen Bereich und dem Kunststoff eine kraftschlüssige Verbindung erzeugt wird.

Durch die kraftschlüssige Verbindung bei den in der DE 103 61 096 A1 offenbarten Hybridbauteilen kann die Verbindung zwischen der metallischen und der Kunststoffkomponente auf die gesamte Kontaktfläche ausgedehnt werden. Es können jedoch weiterhin keine Hybridbauteile geschaffen werden, die die hohen Anforderungen hinsichtlich der Korrosionsbeständigkeit bei gleichzeitig ausreichender Schweißbarkeit, die beispielsweise an Komponenten für Kraftfahrzeuge gestellt werden, erfüllen.

Ausgehend von diesem Stand der Technik liegt der Erfindung daher die Aufgabe zugrunde, ein Hybridbauteil sowie ein Verfahren zu dessen Herstellung anzugeben, bei dem zumindest ein aus dem Stand der Technik bekannter Nachteil verringert wird. Insbesondere soll das erfindungsgemäße Hybridbauteil eine ausreichende Schweißbarkeit bei guter Korrosionsbeständigkeit aufweisen.

Diese Aufgabe wird durch die Gegenstände der unabhängigen Patentansprüche gelöst. Vorteilhafte Ausführungsformen sind Gegenstand der jeweiligen abhängigen Patentansprüche.

Das erfindungsgemäße Hybridbauteil gemäß Anspruch 1 weist jeweils mindestens ein Metall-und ein hiermit stoffschlüssig verbundenes Kunststoffelement sowie eine dazwischen angeordnete, haftvermittelnde Beschichtung auf. Erfindungsgemäß ist die haftvermittelnde Beschichtung als Lacksystem mit darin befindlichen thermoplastischen Partikeln ausgebildet.

Die erfindungsgemäße Ausgestaltung der haftvermittelnden Beschichtung als Lacksystem ermöglicht, die metallische Komponente des Hybridbauteils vor der Verbindung mit dem Kunststoffelement mit einer Schicht zu versehen, die zum einen eine ausreichende Haftung an dem Metall aufweist, durch die Einbindung der thermoplastischen Partikel weiterhin eine Verbindung mit dem Kunststoffelement eingeht, und schließlich so dünn ausgebildet werden kann, dass eine Schweißbarkeit des Metallelements ebenfalls gegeben ist.

Weiterhin wirkt die erfindungsgemäße haftvermittelnde Beschichtung als Korrosionsschutzschicht für das Metallelement.

In einer vorteilhaften Ausführungsform des erfindungsgemäßen Verfahrens wird das Kunststoffelement durch Hinterspritzen des Metallelements erzeugt. In der Regel erfolgt dies durch das Einlegen des gegebenenfalls bereits umgeformten und mit der erfindungsgemäßen haftvermittelnden Beschichtung versehenen Metallelements in eine Kavität eines Kunststoffspritzgießwerkzeugs und das darauf folgende Einspritzen des plastifizierten Kunststoffs in diese Kavität. Durch dieses Verfahren können u.a. auf vorteilhafte Weise komplexe geometrische Formen des Kunststoffelements erzeugt werden. Durch die hohen Temperaturen des plastifizierten Kunststoffs kann weiterhin ein Verschweißen des Kunststoffs mit den thermoplastischen Partikeln in der erfindungsgemäßen haftvermittelnden Beschichtung und daraus folgend eine gute stoffschlüssige Verbindung des Kunststoffelements mit der Beschichtung sowie über die Beschichtung mit dem Metallelement erzielt werden.

Polyamid eignet sich vorteilhaft für die Herstellung des Kunststoffelements, da es gute mechanische Kennwerte mit einer guten Verarbeitbarkeit kombiniert. Um besonders gute mechanische Kennwerte zu erzielen, kann das Polyamid ferner mit Glas- oder sonstigen Verstärkungsfasern verstärkt sein.

Eine erfindungsgemäße haftvermittelnde Beschichtung ist als Lacksystem auf Polyacrylbasis mit darin befindlichen thermoplastischen Partikeln auf Polyamidbasis ausgebildet. In diesem Fall sind die thermoplastischen Partikel besonders bevorzugt auf Basis von PA6, PA12 oder einem Copolymer hieraus ausgebildet.

Diese besonders bevorzugten haftvermittelnden Beschichtungen haben sich als besonders vorteilhaft hinsichtlich der geforderten Eigenschaften herausgestellt. Insbesondere ermöglichen sie die Ausbildung besonders dünner Beschichtungen, die eine Schweißbarkeit des Metallelements nicht wesentlich behindern und trotzdem einen ausreichenden Korrosionsschutz sicherstellen und ausreichend tiefziehtauglich sowie temperaturbeständig sind. Die Temperaturbeständigkeit ermöglicht ferner eine nachträgliche KTL-Beschichtung (KTL: Kathodische Tauchlackierung), wie es beispielsweise für Bauteile der Karosserie von Kraftfahrzeugen erforderlich ist.

In einer weiterhin bevorzugten Ausführungsform dieser haftvermittelnden Beschichtungen können diese ferner einen Isocyanat-Anteil enthalten. Durch die Zugabe des Isocyanats kann bereits bei den mit dem Einspritzen des plastifizierten Kunststoffs einhergehenden Temperaturen eine Teilvernetzung der Partikel in der haftvermittelnden Beschichtung stattfinden, so dass die Haftung zu dem Kunststoffelement weiter verbessert und/oder die thermische Beständigkeit der Haftvermittlerschicht optimiert werden kann.

In einer weiterhin bevorzugten Ausführungsform ist die haftvermittelnde Beschichtung zumindest zweischichtig aufgebaut, wobei die thermoplastischen Partikel in der dem Kunststoffelement zugewandten Schicht enthalten sind. Die dem Metallelement zugewandte Schicht der zumindest zweischichtigen haftvermittelnden Beschichtung weist somit einen relativ geringen (oder gar keinen) Anteil an thermoplastischen Partikeln auf, da diese die Haftung des Lacksystems zu dem Metall negativ beeinflussen können. Die dem Kunststoffelement zugewandte Schicht weist dagegen einen hinsichtlich der Haftung mit dem Kunststoffelement optimierten Anteil an thermoplastischen Partikeln auf. Durch die ebenfalls gute Haftung dieser zwei, vorzugsweise auf demselben Lacksystem beruhenden Teilbeschichtungen untereinander kann eine besonders gute kraftschlüssige Verbindung zwischen dem Metall- und dem Kunststoffelement erzielt werden.

Die Beschichtungen können bevorzugt mittels Lackiertechniken (z.B. ESTA-Lackierung), gegebenenfalls mit einer entsprechenden Schablone zur Maskierung, über Sprüh-, Tauch- oder Spritzgießauftrag (der Platine oder des bereits umgeformten Blechs), Druckverfahren wie Siebdruck, Tampon-Print, etc. oder auch direkt über einen Walzenauftrag (Coil Coating) auf das Blech appliziert werden. Hierbei kann der Beschichtungswerkstoff in flüssiger (auch gelöster), pulver-, granulatförmiger oder aufgeschmolzener Form eingesetzt werden. Gegebenenfalls müssen diese nach dem Auftrag noch in einem Ofen eingebrannt werden, um die erforderlichen Kennwerte zu erzielen.

Um die Schweißbarkeit des Bauteils weiter zu verbessern, kann die haftvermittlende Beschichtung weiterhin mit leitfähigen Partikeln wie Metallpulver, Ruß. Graphit, etc. versehen werden.

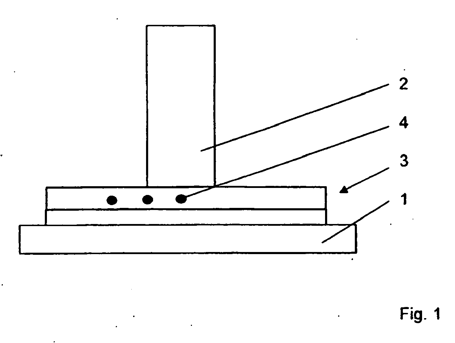

Die Figur 1 zeigt in einer schematischen Darstellung den Aufbau eines Hybridbauteils.

Das dargestellte Hybridbauteil besteht aus einem Stahlblechelement 1 sowie einem Kunststoffelement 2. Zwischen diesen beiden Elementen ist eine zweischichtige Haftvermittlerschicht 3 vorgesehen, mittels der das Kunststoffelement 2 stoffschlüssig an das Blechelement 1 gebunden wird.

Bei der haftvermittelnden Beschichtung 3 handelt es sich um ein Lacksystem auf Polyesterbasis, das sich durch eine gute stoffschlüssige Haftung auf dem Metallelement 1 auszeichnet. Um eine gute Haftung der Beschichtung ebenfalls zu dem Kunststoffelement 2, das aus Polyamid besteht, zu gewährleisten, sind in der oberen, d.h. dem Kunststoffelement 2 zugewandten Schicht der haftvermittelnden Beschichtung 3 thermoplastische Partikel 4 auf Polyamidbasis, vorliegend einem Copolymer aus PA6 und PA12 vorgesehen.

Während des Anspritzens des Blechelements mit dem plastifizierten Kunststoff in einem Spritzgießwerkzeug (nicht dargestellt) und den damit einhergehenden hohen Temperaturen kommt es zu einem Verschweißen der thermoplastischen Partikel 4 mit diesem Kunststoff des Kunststoffelements 2 wodurch eine besonders gute stoffschlüssige Verbindung erzielt werden kann.

## Patentansprüche

1. Hybridbauteil aus jeweils mindestens einem Metall- (1) und einem hiermit stoffschlüssig verbundenen Kunststoffelement (2), sowie einer dazwischen angeordneten, haftvermitteinden beschichtung (3), **dadurch gekennzeichnet, dass** die haftvermitteinde Beschichtung (3) ein Lacksystem auf Polyacrylbasis mit darin befindlichen thermoplastischen Partikeln (4) auf Polyamidbasis umfasst.

2. Hybridbauteil gemäß Anspruch 1, **dadurch gekennzeichnet, dass** das Kunststoffelement (2) zumindest teilweise aus Polyamid besteht.

3. Hybridbauteil gemäß Anspruch 2, **dadurch gekennzeichnet, dass** das Polyamid mit Glasfasern verstärkt ist.

4. Hybridbauteil gemäß Anspruch 1, **dadurch gekennzeichnet, dass** die haftvermittelnde Beschichtung (3) einen Isocyanat Anteil enthält.

5. Hybridbauteil gemäß einem der Ansprüche 1 bis 3, **dadurch gekennzeichnet, dass** die haftvermittelnde Beschichtung (3) zumindest zweischichtig aufgebaut ist, wobei die thermoplastischen Partikel (4) in der dem Kunststoffelement (2) zugewandten Schicht enthalten sind.

6. Verfahren zum Herstellen eines Hybridbauteils mit jeweils mindestens einem Metall- (1) und einem Kunststoffelement (2), die stoffschlüssig miteinander verbunden werden, wobei das Metall-(1) und/oder Kunststoffelement (2) mit einer haftvermittelnden Beschichtung (3) versehen wird, **dadurch gekennzeichnet dass** als haftvermittelnde Beschichtung (3) ein Lacksystem auf Polyacrylbasis mit darin befindlichen thermoplastischen Partikeln (4) auf Polyamidbasis verwendet wird.

7. Verfahren gemäß Anspruch 6, **dadurch gekennzeichnet, dass** das Kunststoffelement (2) durch Hinterspritzen des Metallelements (1) erzeugt wird.

8. Verfahren gemäß Anspruch 6 oder 7, **dadurch gekennzeichnet, dass** für das Kunststoffelement (2) ein Polyamid verwendet wird.

9. Verfahren gemäß einem der Ansprüche 6 bis 8, **dadurch gekennzeichnet, dass** für das Kunststoffelement (2) ein Polyamid mit Glasfaserverstärkung verwendet wird.

10. Verfahren gemäß Anspruch 6, **dadurch gekennzeichnet, dass** die haftvermittelnde Beschichtung (3) einen Isocyanat Anteil enthält.

11. Verfahren gemäß einem der Ansprüche 6 bis 11, **dadurch gekennzeichnet, dass** die haftvermittelnde Beschichtung (3) zumindest zweischichtig aufgebracht wird, wobei die thermoplastischen Partikel (4) in der dem Kunststoffelement zugewandten Schicht enthalten sind.

## Claims

1. A hybrid component comprising at least one metal element (1), one plastics element (2) connected thereto via the material, and an intermediate adhesion-promoting coating (3), **characterised in that** the adhesion-promoting coating (3) comprises a polyacryl-based paint system containing polyamide-based thermoplastic particles (4).

2. A hybrid component according to claim 1, **characterised in that** the plastics element (2) consists at least partly of polyamide.

3. A hybrid component according to claim 2, **characterised in that** the polyamide is reinforced with glass fibres.

4. A hybrid component according to claim 1, **characterised in that** the adhesion-promoting coating (3) contains an isocyanate.

5. A hybrid component according to any of claims 1 to 3, **characterised in that** the adhesion-promoting coating (3) is in at least two layers, wherein the thermoplastic particles (4) are contained in the layer facing the plastics element (2).

6. A method of producing a hybrid component containing at least one metal element (1) and one plastics element (2) connected together via the material, wherein the metal element (1) and/or the plastics element (3) has an adhesion-promoting coating (3), **characterised in that** the adhesion-promoting coating (3) is a polyacryl-based paint system containing polyamide-based thermoplastic particles (4).

7. A method according to claim 6, **characterised in that** the plastic element (2) is produced by injection behind the metal element (1).

8. A method according to claim 6 or claim 7, **characterised in that** the plastics element (2) is made of a polyamide.

9. A method according to any of claims 6 to 8, **characterised in that** the plastics element (2) is made of a polyamide reinforced with glass fibres.

10. A method according to claim 6, **characterised in that** the adhesion-promoting coating (3) contains an isocyanate.

11. A method according to any of claims 6 to 11, **characterised in that** the adhesion-promoting coating (3) is applied in at least two layers, wherein the thermoplastic particles (4) are contained in the layer facing the plastics element.

## Revendications

1. Composant hybride formé d'au moins un élément en métal (1) un élément en matière plastique (2) relié à celui-ci par une liaison par la matière et un revêtement adhésif (3), disposé entre ces éléments,
**caractérisé en ce que**
le revêtement adhésif (3) renferme un système de peinture à base de résine polyacrylique renfermant des particules thermoplastiques (4) à base de polyamide.

2. Composant hybride conforme à la revendication 1,
**caractérisé en ce que**
l'élément en matière plastique (2) est au moins en partie en polyamide.

3. Composant hybride conforme à la revendication 2,
**caractérisé en ce que**
le polyamide est renforcé par des fibres de verre.

4. Composant hybride à la revendication,
**caractérisé en ce que**
le revêtement adhésif (3) contient une fraction d'isocyanate.

5. Composant hybride conforme à l'une des revendications 1 à 3,
**caractérisé en ce que**
le revêtement adhésif (3) est formé d'au moins deux couches, les particules thermoplastiques (4) étant contenues dans la couche tournée vers l'élément en matière plastique (2).

6. Procédé d'obtention d'un composant hybride comportant au moins un élément en métal (1) et un élément en matière plastique (2) reliés l'un à l'autre par une liaison par la matière, l'élément en métal (1) et/ou l'élément en matière plastique (2) étant muni d'un revêtement adhésif (3),
**caractérisé en ce que**
le revêtement adhésif (3) est un système de peinture à base de résine polyacrylique renfermant des particules thermoplastiques (4) à base de polyamide.

7. Procédé conforme à la revendication 6,
**caractérisé en ce que**
l'élément en matière plastique (2) est obtenu par pulvérisation au dos de l'élément métallique (1).

8. Procédé conforme à la revendication 6 ou 7,
**caractérisé en ce que**
pour l'élément en matière plastique (2), on utilise un polyamide.

9. Procédé conforme à l'une des revendications 6 à 8,
**caractérisé en ce que**
pour l'élément en matière plastique (2), on utilise un polyamide renforcé par des fibres de verre.

10. Procédé conforme à la revendication 6,
**caractérisé en ce que**
le revêtement adhésif (3) contient une fraction d'isocyanate.

11. Procédé conforme à l'une des revendications 6 à 10,
**caractérisé en ce que**
le revêtement adhésif (3) est appliqué au moins sous la forme de deux couches, les particules thermoplastiques (4) étant contenues dans la couche tournée vers l'élément en matière plastique.
